# EUROPÄISCHE PATENTSCHRIFT

(11) **EP 2 815 632 B1**
(45) Veröffentlichungstag und Bekanntmachung des Hinweises auf die Patenterteilung: **06.07.2016**
(21) Anmeldenummer: 13708336.6
(22) Anmeldetag: 14.02.2013
(51) Int. Cl.: H05B 37/02, H05B 33/08, F21V 8/00, F21S 8/10

(54) **VERFAHREN ZUM ERZEUGEN EINES LAUFLICHTEFFEKTES AN EINER LICHTLEITERSTRUKTUR UND LICHTLEITERSTRUKTUR**
METHOD FOR GENERATING A RUNNING LIGHT EFFECT ON AN OPTICAL WAVE GUIDE STRUCTURE AND OPTICAL WAVE GUIDE STRUCTURE
PROCÉDÉ POUR CRÉER UN EFFET CHENILLARD DANS UNE STRUCTURE DE GUIDE D'ONDES OPTIQUES ET STRUCTURE DE GUIDE D'ONDES OPTIQUES

(30) Priorität: 16.02.2012 AT 1972012
(43) Veröffentlichungstag der Anmeldung: 24.12.2014
(73) Patentinhaber: Zizala Lichtsysteme GmbH, 3250 Wieselburg (AT)
(72) Erfinder: REINPRECHT, Markus, A-3202 Hofstetten (AT); GRAF, Thomas, A-3140 Pottenbrunn (AT); FAFFELBERGER, Anton, A-3375 Krummnußbauem (AT)
(74) Vertreter: Patentanwaltskanzlei Matschnig & Forsthuber OG
(86) Internationale Anmeldenummer: PCT/AT2013/050039
(87) Internationale Veröffentlichungsnummer: WO 2013/120124

(56) Entgegenhaltungen:
- EP-A1- 0 935 091
- EP-A2- 2 302 982
- EP-A2- 2 364 064
- WO-A1-00/14705
- WO-A1-2011/030941

## Beschreibung

Die Erfindung bezieht sich auf ein Verfahren zum Erzeugen eines Lauflichteffektes an einer Lichtleiterstruktur mit zumindest einem Lichtleiter und mit zumindest zwei Lichteinspeisepositionen, welchen je eine Lichtquelle zugeordnet ist, wobei der Lichtleiter zur Führung des eingespeisten Lichts sowie zur Abstrahlung von Licht auf Grund von an dem Lichtleiter ausgebildeten Störstellen eingerichtet ist.

Des Weiteren bezieht sich die Erfindung auf eine Lichtleiterstruktur mit zumindest einem Lichtleiter und mit zumindest zwei Lichteinspeisepositionen, welchen je eine Lichtquelle zugeordnet ist, wobei der Lichtleiter zur Führung des eingespeisten Lichts sowie zur Abstrahlung von Licht auf Grund von an dem Lichtleiter ausgebildeten Störstellen eingerichtet ist.

Leuchtstäbe werden im Fahrzeugbau vermehrt eingesetzt, wobei Licht, z.B. von Leuchtdioden, an einer Stirnfläche in einen Leuchtstab eingespeist wird. Das Licht wird im Inneren an den Begrenzungswänden des meist kreisrunden, gegebenenfalls aber auch einen anderen, z.B. elliptischen oder rechteckigen Querschnitt aufweisenden Lichtleiters total reflektiert, jedoch an den Störstellen, die z.B. prismenartig ausgebildet sind, abgelenkt und im Wesentlichen an der den Störstellen gegenüberliegenden Seite abgestrahlt. Die Geometrie der Leuchtstäbe wird im Kfz-Bau stark durch Designvorgaben bestimmt, wobei sich die gewünschten Konturen oft nicht mehr durch einen einzigen Leuchtstab realisieren lassen und es in vielen Fällen erforderlich ist, einen Leuchtstab in zwei Äste aufzugabeln. Als eines von vielen Dokumenten, welche Leuchtstäbe zeigen, mögen die DE 103 56 483 A1, die DE 101 53 543 A1 genannt werden.

Eine Lichtleiterstruktur der eingangs genannten Art ist aus der EP 0 935 091 A1 bekannt geworden. Gegenstand dieses Dokuments ist ein stabförmiger Lichtleiter, bei welchem zur Erzielung einer gleichmäßigen Leuchtdichte über die gesamte Länge als Störstellen vorgesehene lichtablenkende Prismen eine Breite quer zur Stabachse besitzen, die von der Lichteinkoppelfläche ausgehend zunimmt, wobei auch eine Ausführungsform beschrieben ist, bei welcher an beiden Enden des Lichtleiters eine Lichteinkoppelfläche und dementsprechend zwei Lichtquellen vorgesehen sind.

Eine Aufgabe der Erfindung besteht darin, Verfahren zum Erzeugen eines Lauflichteffektes sowie eine zur Durchführung des Verfahrens geeignete Lichtleiterstruktur zu schaffen, die einen Lauflichteffekt ohne Verwendung einer großen Menge angesteuerter Lichtquellen ergibt. Lauflichteffekte werden derzeit durch eine Vielzahl von hintereinander liegenden und sequentiell angesteuerten Lichtquellen, wie Glühlampen oder LEDs realisiert, was die Produktion und Wartung derartiger Strukturen teuer macht.

Die Aufgabe wird mit einem Verfahren der eingangs genannten Art gelöst, bei welchem erfindungsgemäß die Helligkeit der Lichtquellen unabhängig voneinander nach einer vorgegebenen Regel zeitabhängig geändert wird.

Bei einer vorteilhaften Ausführungsform ist vorgesehen, dass die Helligkeit einer ersten Lichtquelle von einem Maximalwert ausgehende nach einer ersten abfallenden Dimmrampe verringert wird und die Helligkeit einer zweiten Lichtquelle von einem Maximalwert ausgehend nach einer zweiten abfallenden Dimmrampe verringert wird, wobei die Verringerung der Helligkeit der zweiten Lichtquelle zeitverzögert bezüglich des Einsetzzeitpunktes der Verringerung der ersten Lichtquelle beginnt. Hierdurch wird der Eindruck erweckt, dass Licht von einem Ende eines Lichtstabes zu dem anderen Ende fließt.

Bei einer anderen zweckmäßigen Ausführung, welche einen Wischeffekt ermöglicht, kann vorgesehen sein, dass die Helligkeit einer ersten Lichtquelle nach einer ersten ansteigenden Dimmrampe bis zu einem Maximalwert erhöht wird, für eine erste festgelegte Zeitdauer auf diesem Wert gehalten wird und sodann nach einer ersten abfallenden Dimmrampe bis zu einem Minimalwert verringert wird, und die Helligkeit einer zweiten Lichtquelle nach einer zweiten ansteigenden Dimmrampe bis zu einem Maximalwert erhöht wird, für eine zweite festgelegte Zeitdauer auf diesem Wert gehalten wird und sodann nach einer zweiten abfallenden Dimmrampe bis zu einem Minimalwert verringert wird, wobei der Einsetzpunkt der zweiten ansteigenden Dimmrampe bezüglich des Einsetzpunktes der ersten ansteigenden Dimmrampe um eine Startverzögerungszeit zeitverzögert ist und der Einsetzpunkt der zweiten anfallenden Dimmrampe bezüglich des Einsetzpunktes der ersten anfallenden Dimmrampe um eine Stoppverzögerungszeit zeitverzögert ist.

Es kann weiters empfehlenswert sein, wenn der Einsetzpunkt der zweiten ansteigenden Dimmrampe in die erste ansteigende Dimmrampe fällt.

Auch kann der Maximalwert der zweiten Lichtquelle bis zum Ende der ersten abfallenden Dimmrampe der ersten Lichtquelle andauern.

Falls die Lichtquellen Licht unterschiedlicher Farbe abstrahlen, lassen sich zusätzlich Farbübergangseffekte erzielen.

Die gestellte Aufgabe wird weiters mit einer Lichtleiterstruktur der oben genannten Art gelöst, bei welcher erfindungsgemäß den Lichtquellen eine Ansteuerschaltung zugeordnet ist, welche dazu eingerichtet ist, die Helligkeit der Lichtquellen nach vorgebbaren Dimmkurven zeitabhängig zu steuern.

Zweckmäßig ist es eine Ausführungsform, bei welcher die Ansteuerschaltung einen Impulsgeber zur Erzeugung eines Grundimpulses vorbestimmter Dauer aufweist.

Dabei ist es vorteilhaft, wenn der Ausgang des Impulsgebers einem erstem Impulsformer zur Erzeugung eines ersten Ansteuerimpulses mit ansteigender und abfallender Dimmrampe zugeführt ist, der Ausgang des Impulsformers weiters einer Verzögerungsstufe zur Bildung eine Anstiegs- und/oder Abfallverzögerung des Grundimpulses zugeführt ist, der in der Verzögerungsstufe gebildete Impuls mit verzögerter Anstiegs- bzw. Abfallflanke einem zweiten Impulsformer zur Erzeugung eines zweiten Ansteuerimpulses mit entsprechend verzögerter ansteigender und abfallender Dimmrampe zugeführt ist und die Ausgänge des ersten und des zweiten Impulsformers je zumindest einer Ansteuer- und Treiberstufe für die erste bzw. zweite Lichtquelle zugeführt sind.

Bei oft zweckmäßigen Varianten sind die Lichtleiter gebogen.

Auch kann es zweckdienlich sein, wenn die Lichtleiterstruktur zwei Lichtleiter aufweist, die parallel verlaufen und einstückig ausgebildet sind.

Bei einer weiteren empfehlenswerten Variante kann vorgesehen sein, dass die Lichtleiterstruktur zwei Lichtleiter aufweist, die an einem Ende zusammengeführt sind und an diesem Ende eine Lichteinspeiseposition für eine erste gemeinsame Lichtquelle sowie an ihren anderen Enden eine zweite und dritte Lichtquelle an einer zweiten und dritten Lichteinspeiseposition besitzen.

Wieder eine andere praxisnahe Variante sieht vor, dass sie zumindest zwei Lichtleiter aufweist, jeden Lichtleiter an einem Ende an einer Lichteinspeiseposition eine Lichtquelle zugeordnet ist, jeder Lichtleiter einen Leuchtabschnitt aufweist und die Leuchtabschnitte unter Bildung einer im Wesentlichen durchgehenden Leuchtstruktur aneinander anschließen. Dabei ist es vorteilhaft, wenn von den Lichteinspeisepositionen ausgehende Lichtleitabschnitte über eine Abwinkelung zu den Leuchtabschnitten führen, da hierdurch die Einspeisestellen von dem Lichtaustritt entfernt angeordnet werden können.

Die Erfindung ist im Folgenden an Hand beispielsweiser Ausführungsformen näher erläutert, die in der Zeichnung veranschaulicht sind. In dieser zeigen
Fig. 1 eine Ansicht einer ersten Ausführungsform einer Lichtleiterstruktur nach der Erfindung,
Fig. 2 eine Ansicht einer zweiten Ausführungsform einer Lichtleiterstruktur nach der Erfindung,
Fig. 3 eine Ansicht einer dritten Ausführungsform einer Lichtleiterstruktur nach der Erfindung,
Fig. 4 eine Ansicht einer vierten Ausführungsform einer Lichtleiterstruktur nach der Erfindung,
Fig. 5 die Ansicht eines Abschnittes eines bei der Erfindung verwendeten Lichtleiters,
Fig. 6 einen ersten beispielsweisen zeitlichen Verlauf der Helligkeitssteuerung von zwei bei der Erfindung verwendeten Lichtquellen,
Fig. 7 einen zweiten beispielsweisen zeitlichen Verlauf der Helligkeitssteuerung von zwei bei der Erfindung verwendeten Lichtquellen,
Fig. 8 einen dritten beispielsweisen zeitlichen Verlauf der Helligkeitssteuerung von zwei bei der Erfindung verwendeten Lichtquellen,
Fig. 9 einen vierten beispielsweisen zeitlichen Verlauf der Helligkeitssteuerung von zwei bei der Erfindung verwendeten Lichtquellen,
Fig. 10 ein Blockschaltbild einer beispielsweisen Ansteuerschaltung einer Lichtleiterstruktur nach der Erfindung, und
Fig. 11 eine Ansicht einer fünften Ausführungsform einer Lichtleiterstruktur nach der Erfindung.

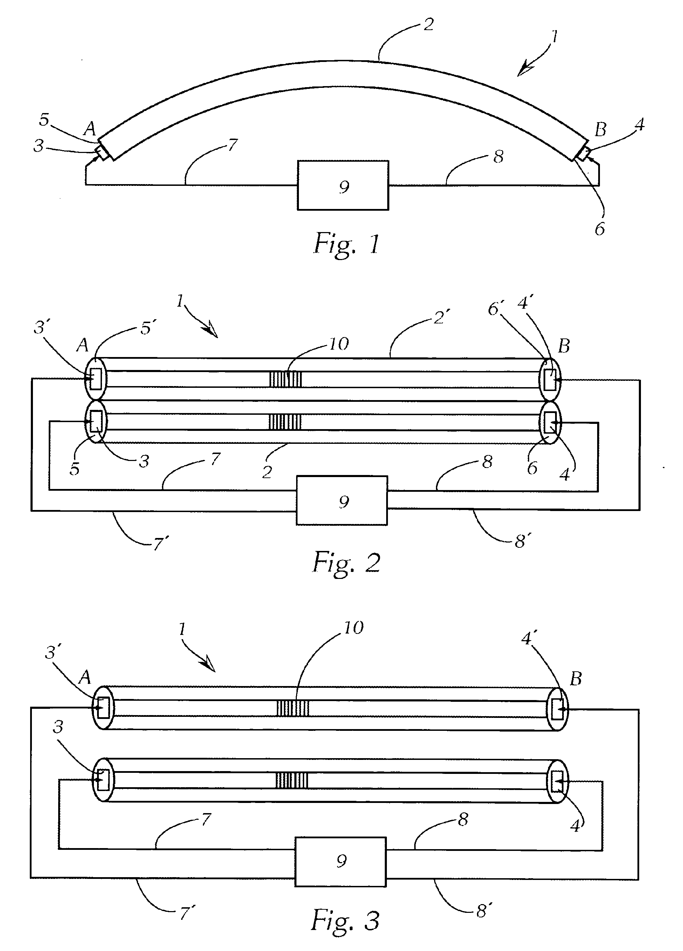

Unter Bezugnahme auf die Fig. 1 bis 5 werden zunächst einige beispielhafte Lichtleiterstrukturen und die dabei verwendeten Lichtleiter beschrieben.

Die Struktur 1 nach Fig. 1 zeigt einen leicht gekrümmten Lichtleiter 2, der an jedem seiner beiden Enden an einer Lichteinspeiseposition A bzw. B eine Lichtquelle 3 bzw. 4 aufweist, die Licht in eine Lichteintrittsfläche 5, 6 einstrahlen kann. Jede der beiden Lichtquellen 3, 4 wird über Speiseleitungen 7, 8 von einer Ansteuerschaltung 9 angespeist. Als Lichtquellen kommen bevorzugt LEDs in Frage, doch können auch andere Lichtquellen, wie Glühlampen, Xenonlampen etc. Anwendung finden.

Fig. 2 zeigt eine Lichtleiterstruktur 1, die als Doppelstab ausgebildet ist, und zwei Lichtleiter 2, 2' aufweist, die einstückig ausgebildet sind. Wiederum besitzt jeder Lichtleiter 2, 2' Lichteintrittsflächen 5, 5'; 6, 6', in welche Lichtquellen 3, 3'; 4, 4' einstrahlen können. Eine Ansteuerschaltung versorgt über Speiseleitungen 7, 7'; 8, 8' die vorgenannten Lichtquellen 3, 3'; 4, 4'. In Fig. 2 erkennt man auch, dass jeder Lichtleiter eine Struktur aus Störstellen 10 besitzt, wobei diese Störstellen im Allgemeinen als Prismen oder prismenähnlich ausgebildet sind.

Die Lichtleiterstruktur 1 nach Fig. 3 unterscheidet sich von jener nach Fig. 2 lediglich dadurch, dass die beiden Lichtleiter 2, 2' nicht einstückig, sondern getrennt voneinander ausgebildet sind.

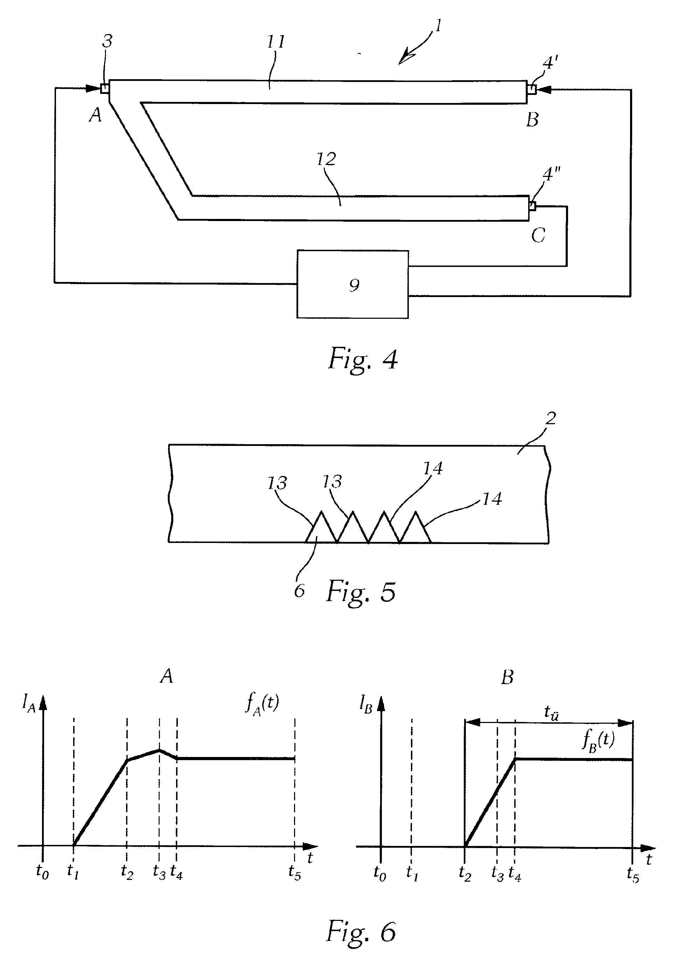

Fig. 4 zeigt eine weitere Lichtleiterstruktur 1, die aus - lichttechnisch gesehen - zwei voneinander getrennten Lichtleitern 11, 12 besteht, wobei ein Lichtleiter 11 gerade ausgebildet ist und der zweite Lichtleiter 12 gekrümmt ist. Mechanisch gesehen ist die Lichtleiterstruktur 1 einstückig und sie besitzt am Ort des Zusammentreffens der beiden Lichtleiter 11, 12 eine erste Lichteinspeiseposition A und an den Enden der beiden Lichtleiter 11, 12 je eine weitere Lichteinspeiseposition B und C. Die Ansteuerung der hier nicht näher bezeichneten Lichtquellen erfolgt wiederum über eine Ansteuerschaltung 9.

Fig. 5 zeigt einen vergrößerten Abschnitt eines Lichtleiters 2, an dem die Struktur aus Störstellen 10 ersichtlich ist. Hier weisen die Prismen der Struktur 6 jeweils zwei Lichtflächenseiten auf, nämlich je Lichtflächenseiten 13 und Lichtflächenseiten 14. Dadurch wird ermöglicht, dass von beiden Seiten des Lichtleiters 2 eingespeistes Licht tatsächlich abgestrahlt wird, im Wesentlichen an der der Struktur 10 gegenüberliegenden Seite des Lichtleiters 2.

Unter Bezugnahme auf Fig. 6 soll nun ein erstes Beispiel des erfindungsgemäßen Verfahrens zum Erzeugen eines Lauflichteffekts im Zusammenhang mit den gezeigten Lichtleiterstrukturen erläutert werden. Das obere Diagramm der Fig. 6 bezieht sich auf den Intensitätsverlauf einer ersten Lichtquelle an der Position A und das darunterliegende Diagramm auf den Intensitätsverlauf einer zweiten Lichtquelle an einer Position B, wobei diese Positionen A und B beispielsweise den in Fig. 1 eingezeichneten entsprechen. Zu einer Zeit t₁ beginnt die Ansteuerschaltung 9, die erste Lichtquelle entsprechend einer hier linearen Dimmrampe zu speisen, d.h. die Intensität I steigt bis zu einem Zeitpunkt t₂ an. Zu diesem Zeitpunkt t₂ setzt auch das Speisen der zweiten Lichtquelle an der Position B, hier wieder mit einer linearen Dimmrampe, ein. Bis zu einer Zeit t₃ wird hier die erste Lichtquelle an der Position A wieder gemäß einer Dimmrampe weitergespeist, deren Steigung jedoch geringer ist als während der Zeit t₁ bis t₂. Beginnend mit einem Zeitpunkt t₃ bis zu einem Zeitpunkt t₄ wird die erste Lichtquelle an der Position A leicht zurückgeregelt, was man an der fallenden, kurzen Rampe in der Zeit zwischen t₃ und t₄ erkennen kann. Die zweite Lichtquelle an der Position B wird im gesamten Zeitraum von t₂ bis t₄ weiter gemäß einer hier linearen Dimmrampe hochgedimmt, bis schließlich zu dem Zeitpunkt t₄ beide Lichtquellen an den Positionen A und B mit maximaler Intensität leuchten, hier bis zu einem Abschaltzeitpunkt t₅. Mit t_{ü} ist die Überlappungszeit bezeichnet, d.h. jene Zeit, in der beide Lichtquellen Licht entsprechend der vorgegebenen Dimmkurven abgeben. Selbstverständlich müssen beide Lichtquellen nicht notwendigerweise mit maximaler Intensität leuchten, vielmehr ist auch ein Zurückdimmen einer oder beider Lichtquellen bis auf 0% möglich, um den Wischeffekt zu verstärken.

Die Zeit des Aufdimmens der Lichtquelle an der Position A ist abhängig von der Anwendung und kann zwischen wenigen Millisekunden und mehreren Sekunden liegen. Zeitversetzt um t₂ - t₁ wird dann die zweite Lichtquelle an der Position B, hier an der anderen Seite des Lichtleiters 2, aufgedimmt.

Der Lichtleiter ist so ausgelegt, dass bei voller Beleuchtung der gesamte Lichtleiter eine möglichst gleichmäßige Lichtdichte aufweist. Während der Dimmphasen der beiden Lichtquellen erscheint der Leuchtstab bzw. Lichtleiter jedoch nicht homogen und das sich ändernde Leuchtdichteprofil während der Dimmphasen ist so ausgelegt, dass ein Wischeffekt - bei der Struktur 1 nach Fig. 1 von links nach rechts - wahrgenommen wird, wobei für diesen Wischeffekt die richtige Wahl der Überlappungszeit und der Dimmrampen wichtig ist.

Die Erfahrung hat gezeigt, dass der Wischeffekt dadurch verstärkt werden kann, dass die Intensität I_{A} der ersten Lichtquelle im obengenannten Rückregelbereich, d.h. in der Zeit von t₃ bis t₄, leicht zurückgenommen wird, z.B. auf etwa 80 % der maximalen Intensität. Ein solches Zurückdimmen um einen gewissen Betrag kann nicht nur während der Dimmrampe der zweiten Lichtquelle an der Position B, sondern auch noch danach erfolgen.

Bei einer möglichen Anwendung als "Wischer-Blinker" bei Kraftfahrzeugen wird beispielsweise mit orangefarbenen Lichtquellen von beiden Seiten eines Lichtstabes eingespeist. Eine erste Lichtquelle wird sodann innerhalb von ca. 100 ms aufgedimmt und etwa 10 bis 20 % vor Erreichen der vollen Helligkeit dieser ersten Lichtquelle wird bei der zweiten Lichtquelle der Dimmvorgang eingeleitet, so dass nach maximal 200 ms die volle Helligkeit erreicht wird.

Die im Rahmen der Erfindung verwendeten Lichtquellen müssen keineswegs weißes Licht abstrahlen oder monochromatisch sein, vielmehr können auch Lichtquellen mit veränderlichen Farben (RGB-Lichtquellen) verwendet werden. Dabei ist es möglich, beispielsweise an einer ersten Position A einen Farbübergang von rot auf grün zu erzeugen, der einige Sekunden dauert. Durch einen zeitlich versetzten Farbübergang an der zweiten Position erhält ein Betrachter dann den Eindruck, als würde die Farbe im Lichtleiter von einer Seite zu der anderen fließen.

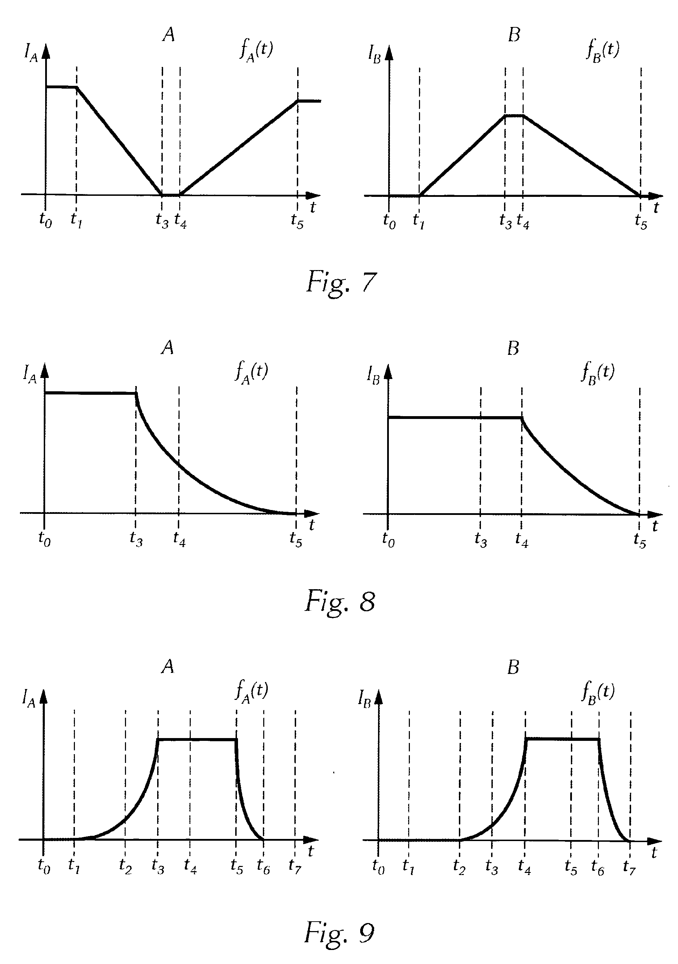

Ein weiteres Beispiel möglicher Dimmkurven zeigen die beiden Darstellungen der Fig. 7, die analog zu jenen nach Fig. 6 zu verstehen sind. Die Intensität I_{A} einer ersten Lichtquelle an einer Position A geht zum Zeitpunkt to von einem bestimmten Maximalwert aus, der beliebig definiert werden kann. Zu einem Zeitpunkt t₁ beginnt ein Abdimmen durch eine fallende Dimmrampe, wobei diese hier als Beispiel linear dargestellt ist, jedoch sind für sämtlich hier beschrieben Dimmrampen ebenso logarithmische, exponentielle, quadratische oder andere Kurvenformen möglich, wobei die Intensität bis zu einem minimalen Wert zu einem Zeitpunkt t₂ absinkt und auf diesem minimalen Wert, der gleichfalls frei gewählt werden kann, z.B. 0 % oder 10 % der maximalen Intensität, bleibt. Hier sei angemerkt, dass die fallende Rampe bereits zu dem Zeitpunkt to beginnen kann, d.h. der gleichmäßige Intensitätswert von to bis t₁ übersprungen werden kann. Zu dem Zeitpunkt t₃ wird die Lichtquelle an der Position A gemäß einer steigenden Dimmrampe angesteuert, die auch hier linear gezeigt ist, doch ebenso eine andere Kurvenform besitzen kann. Die Dimmrampe des Aufdimmens kann auch sofort nach dem Erreichen des Minimalwerts am Fußpunkt der fallenden Dimmrampe beginnen, d.h. die Zeitdauer von t₂ bis t₃ kann übersprungen werden. Am Ende der steigenden Dimmrampe, zu einem Zeitpunkt t₄, hat dann die Lichtquelle an der Position A wieder eine maximale Helligkeit erreicht.

Betrachtet man den Intensitätsverlauf der zweiten Lichtquelle an der Position B, so sieht man, dass die zweite Lichtquelle so angesteuert wird, dass der zeitliche Helligkeitsverlauf genau gegensätzlich zu jenem der ersten Lichtquelle an der Position A ist. Auch hier ist es möglich, entsprechend der zuvor in Fig. 6 beschriebenen Variante Zeitverzögerungen beim Einsetzen der Dimmrampen vorzusehen und ebenso können unterschiedliche Minimal- und Maximalwerte beider Lichtquellen vorgegeben werden. Diese Art der Ansteuerung macht mit verschiedenfarbigen Lichtquellen Sinn, da dadurch der Effekt entsteht, dass das Licht von Position A (z.B. Blau) von dem Licht von Position B (z.B. Weiß) langsam zurückgedrängt wird, bis zum Zeitpunkt t2 der Leuchtstab nur noch Weiß erscheint.

Anhand der in Fig. 8 dargestellten Dimmkurven zweiter Lichtquellen an Positionen A und B ist ein zeitversetztes Abdimmen beider Lichtquellen beschrieben, was bei einem Betrachter den Eindruck eines Herausfließens von Licht aus dem Lichtleiter erweckt. Eine erste Lichtquelle an der Position A ist so angesteuert, dass sie von einem Zeitpunkt to bis zu einem Zeitpunkt t₁ mit einer konstanten Intensität leuchtet und sie wird, beginnend zu einer Zeit t₁ bis zu einem Zeitpunkt t₃, nach einer fallenden Dimmkurve herabgedimmt.

Eine zweite Lichtquelle an der Position B leuchtet gleichfalls zu Beginn, d.h. zur Zeit t₀, mit einer gewissen Intensität, die über die Zeit t₁ hinaus bis zu einer Zeit t₂ konstant bleibt. Erst zu dem Zeitpunkt t₂ wird auch die zweite Lichtquelle an der Position B auf einen Mmimalwert oder auf 0 nach einer fallenden Dimmkurve abgedimmt, die steiler als die fallende Dimmkurve der ersten Lichtquelle verläuft, da die zum Abdimmen zur Verfügung stehende Zeit kürzer ist.

Nun auf Fig. 9 verweisend, sei eine weitere Variante des erfindungsgemäßen Verfahrens erläutert, die einen anderen Effekt eines laufenden Lichtes ergibt. Zwischen einem Zeitpunkt to und einem Zeitpunkt t₁ sind beide Lichtquellen an den Positionen A und B ausgeschaltet. Zum Zeitpunkt t₁ beginnt ein Hochdimmen der Lichtquelle an der Position A längs einer ersten ansteigenden Dimmrampe, bis zu einem Zeitpunkt t₃ ein maximaler Intensitätswert erreicht ist. Die Intensität der Lichtquelle an der Position A bleibt dann bis zu einem Zeitpunkt t₄ konstant, um von hier mit einer fallenden Dimmrampe gegen 0 oder einen Minimalwert zu einem Zeitpunkt t₅ zu gehen.

Demgegenüber setzt ein Hochdimmen der Lichtquelle an der Position B erst zu einem Zeitpunkt t₂ ein, der in der ansteigenden Dimmrampe der ersten Lichtquelle liegt. Die steigende Dimmrampe der zweite Lichtquelle an der Position B geht bis zu einem Maximalwert, der zu einem Zeitpunkt t₄ erreicht wird, und bleibt auf diesem Maximalwert bis zu einem Zeitpunkt t₆. Hier fällt dann die Intensität durch entsprechende Ansteuerung seitens der Ansteuerschaltung 9 gemäß einer fallenden Dimmrampe bis auf einen Minimalwert oder den Wert 0 zu einem Zeitpunkt t₇. Durch das langsame Hochdimmen der ersten Lichtquelle an der Position A entsteht der Eindruck eines zum Ende hin dunkel werdenden Leuchtstabes bzw. Lichtleiters. Durch das verzögerte Hochdimmen der zweiten Lichtquelle an der Position B wird der noch dunklere Bereich erhellt und beide Lichtquellen werden bis zu einem Maximum hochgedimmt. Um dabei einen durchlaufenden Effekt zu erzeugen, muss während des Abschaltvorgangs zunächst die Lichtquelle 1 abgedimmt werden.

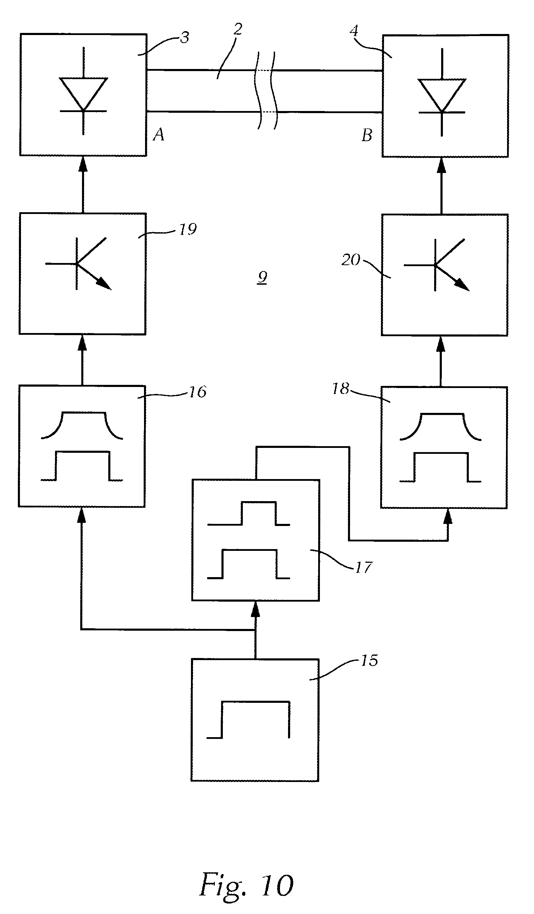

Unter Bezugnahme auf Fig. 10 wird nun eine für die Durchführung des erfindungsgemäßen Verfahrens geeignete Ansteuerschaltung im Prinzip erläutert, wobei diese Ansteuerschaltung 9 dazu eingerichtet ist, die Helligkeit der Lichtquellen nach vorgebbaren Dimmkurven zeitabhängig zu steuern. In Fig. 10 sind die für die Ansteuerschaltung 9 wesentlichen Funktionen in Blöcke aufgeteilt. Ein Impulsgeber 15 dient zur Erzeugung eines Grundimpulses vorbestimmter Dauer, wobei dieser Grundimpuls, der als Ansteuer- oder Auslöseimpuls dient, periodisch in fixer Zeitfolge oder spontan mit längeren Pausen erfolgen erzeugt werden kann.

Der Ausgang des Impulsgebers 15 ist einem ersten Impulsformer 16 zur Erzeugung eines ersten Ansteuerimpulses mit ansteigender und abfallender Dimmrampe sowie einer Verzögerungsstufe 17 zur Bildung einer Anstiegs- und/oder Abfallverzögerung des Grundimpulses zugeführt. Der in der Verzögerungsstufe 17 gebildete Impuls mit verzögerter Anstiegs- bzw. Abfallflanke ist einem zweiten Impulsformer 18 zur Erzeugung eines zweiten Ansteuerimpulses mit entsprechend verzögerter ansteigender und abfallender Dimmrampe zugeführt. Dabei steuert die Verzögerungsstufe den zweiten Impulsformer 18 mit einer an die Länge des Leuchtstab bzw. an den erwünschten Effekt angepassten Zeit. Die Verzögerungsstufe 17 übernimmt auch im Abschaltemoment die Zeitverschiebung um einen Wischeffekt in der gewünschten Richtung zu erwirken. Die Ausgänge des ersten und des zweiten Impulsformers 16, 18 gelangen zu je zumindest einer Ansteuer- und Treiberstufe 19 bzw. 20 für die erste bzw. zweite Lichtquelle 3, 4. Die in den Impulsumformern 16 und 18 erzeugten Dimmrampen sind einerseits an das menschliche Auge und andererseits an die frei wählbare Form des Leuchtstabes angepasst. Die Dimmrampen werden jeweils auf die Geometrie, auf die Empfindlichkeit des menschlichen Auges und an den gewünschten Effekt (Wischen oder Farbverschiebung) parametriert und sie folgen im Allgemeinen nicht einer mathematischen Funktion, sondern sie können, wie weiter oben bereits angedeutet, beliebigen Funktionen folgen, z.B. mehreren stetigen und/oder zusammengesetzten mathematischen Funktionen, die auch eine oder mehrere Sprungstellen enthalten können.

Der Anstiegs und Abfall-Algorithmus ist unterschiedlich ausgeführt, um den Wischeffekt zu optimieren. Jeder Impulsformer kann eine oder mehrere Ansteuer- und Treiberstufen 19, 20 ansteuern. Insbesondere bei Farbmischanwendungen werden auch mehrere Impulsformer und Ansteuer- und Treiberstufen benötigt. In der Zeichnung ist die Möglichkeit der Verwendung mehrerer Impulsumformer 16 und 18, mehrerer Ansteuer- und Treiberstufe 19, 20 sowie mehrerer erster bzw. zweiter Lichtquellen 3, 4 strichliert angedeutet. Ebenso ist zur Veranschaulichung der Gesamtstruktur ein Lichtleiter 2 mit zwei Lichteinspeisepositionen A bzw. B eingezeichnet.

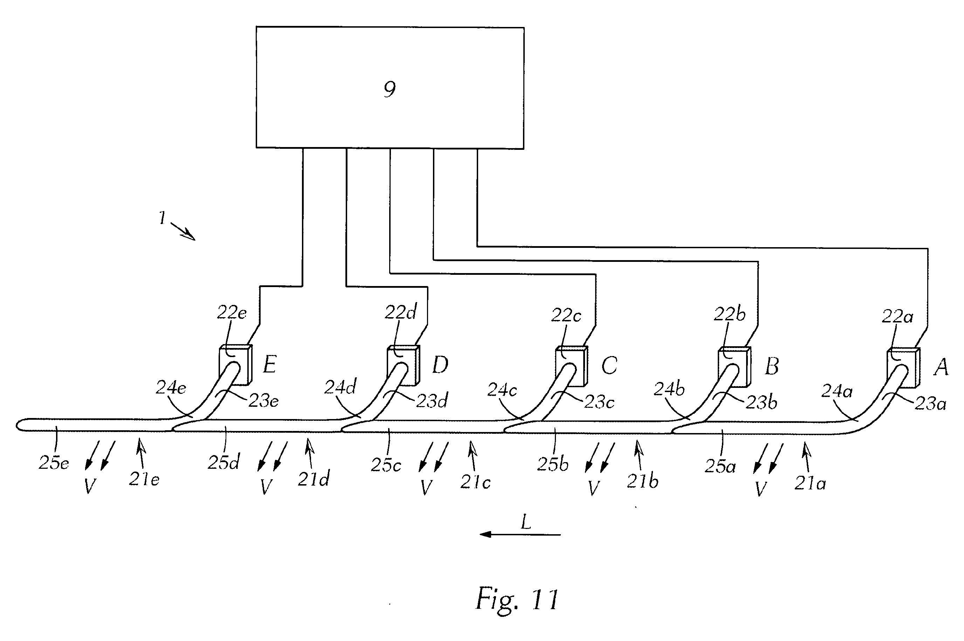

Fig. 11 zeigt schließlich eine Ausführungsform der Erfindung, mit welcher sich gleichfalls ein Lauflichteffekt erzeugen lässt und dessen Lichtleiterstruktur 1 aus zwei oder mehr, im gezeigten Beispiel aus fünf einzelnen Lichtleitern 21a ... 21e zusammengesetzt ist, welche an einem Einspeiseende je eine Lichtquelle 22a ... 22e aufweisen und somit fünf Lichteinspeisepositionen A ... E vorhanden sind.

Bei jedem Lichtleiter 21a ...21e führt von der Lichtquelle 22a ... 22e ausgehend ein hier im Wesentlichen gleicher Lichtleiterabschnitt 23a ... 23e weg und geht über eine Abwinkelung 24a ... 24e in den eigentlichen Leuchtabschnitt 25a ... 25e über, welcher wie bei den zuvor beschriebenen Lichtleitern eine Störstellenstruktur aufweist, die zu einer Lichtabstrahlung in die gewünschte Richtung, angedeutet durch Pfeil V, führt.

Bei dem gezeigten Beispiel schließen die fünf Leuchtabschnitte 25a ... 25e im Wesentlichen lückenlos aneinander an, so dass von vorne gesehen der Eindruck einer durchgehenden, bandförmigen Leuchtstruktur vorliegt. Der Begriff "vorne" bezieht sich natürlich lediglich auf die Lichtabstrahlrichtung und orientiert sich keineswegs an einem Fahrzeug oder dessen Fahrtrichtung.

Die Ansteuerung der einzelnen Lichtquellen kann nun im Sinne des oben beschriebenen Verfahrens und seiner Varianten gedimmt und zeitversetzt durch eine Ansteuerschaltung 9 erfolgen, um den gewünschten Lauflichteffekt, z.B. in einer Richtung des Pfeils L, zu erreichen. Die genaue Ansteuerung der fünf Lichtquellen 22a ... 22e und die Anschaltung einer Ansteuerschaltung analog der Ansteuerschaltung 9 kann der Fachmann nach Kenntnis der gezeigten Ausführungsbeispiele problemlos realisieren, wobei er große Freiheiten bezüglich der Form der Ansteuerrampen, des zeitlichen Verlaufs und gewünschten Farbeffekte hat.

## Patentansprüche

1. Verfahren zum Erzeugen eines Lauflichteffektes an einer Lichtleiterstruktur (1) mit zumindest einem Lichtleiter (2, 2'; 11, 12; 21a ... e) und mit zumindest zwei Lichteinspeisepositionen (A ... E), welchen je eine Lichtquelle (3, 3'; 4, 4', 4"; 22a ... e) zugeordnet ist, wobei der Lichtleiter zur Führung des eingespeisten Lichts sowie zur Abstrahlung von Licht auf Grund von an dem Lichtleiter ausgebildeten Störstellen eingerichtet ist,
**dadurch gekennzeichnet, dass**
die Helligkeit der Lichtquellen (3, 3'; 4, 4', 4"; 22a ... e) unabhängig voneinander nach vorgegebenen Dimmkurven zeitabhängig geändert wird.

2. Verfahren nach Anspruch 1, **dadurch gekennzeichnet, dass** die Helligkeit einer ersten Lichtquelle (3) von einem Maximalwert ausgehende nach einer ersten abfallenden Dimmrampe verringert wird und die Helligkeit einer zweiten Lichtquelle (4) von einem Maximalwert ausgehend nach einer zweiten abfallenden Dimmrampe verringert wird, wobei die Verringerung der Helligkeit der zweiten Lichtquelle zeitverzögert bezüglich des Einsetzzeitpunktes (t₃) der Verringerung der ersten Lichtquelle beginnt.

3. Verfahren nach Anspruch 1, **dadurch gekennzeichnet, dass** die Helligkeit einer ersten Lichtquelle (3) nach einer ersten ansteigenden Dimmrampe bis zu einem Maximalwert erhöht wird, für eine erste festgelegte Zeitdauer (t₅ - t₃) auf diesem Wert gehalten wird und sodann nach einer ersten abfallenden Dimmrampe bis zu einem Minimalwert verringert wird, und die Helligkeit einer zweiten Lichtquelle (4) nach einer zweiten ansteigenden Dimmrampe bis zu einem Maximalwert erhöht wird, für eine zweite festgelegte Zeitdauer (t₆ - t₄) auf diesem Wert gehalten wird und sodann nach einer zweiten abfallenden Dimmrampe bis zu einem Minimalwert verringert wird, wobei der Einsetzpunkt der zweiten ansteigenden Dimmrampe bezüglich des Einsetzpunktes der ersten ansteigenden Dimmrampe um eine Startverzögerungszeit (t₂ - t₁) zeitverzögert ist und der Einsetzpunkt der zweiten anfallenden Dimmrampe bezüglich des Einsetzpunktes der ersten anfallenden Dimmrampe um eine Stoppverzögerungszeit (t₇ -t₆) zeitverzögert ist.

4. Verfahren nach Anspruch 1, **dadurch gekennzeichnet, dass** der Einsetzpunkt (t₂) der zweiten ansteigenden Dimmrampe in die erste ansteigende Dimmrampe fällt.

5. Verfahren nach Anspruch 1, **dadurch gekennzeichnet, dass** der Maximalwert der zweiten Lichtquelle (4) bis zum Ende (t₅) der ersten abfallenden Dimmrampe der ersten Lichtquelle andauert.

6. Verfahren nach einem der Ansprüche 1 bis 5, **dadurch gekennzeichnet, dass** die Lichtquellen (3, 3'; 4, 4', 4"; 22a ... e) Licht unterschiedlicher Farbe abstrahlen.

7. Lichtleiterstruktur (1) mit zumindest einem Lichtleiter (2, 2'; 11, 12; 21a ... e) und mit zumindest zwei Lichteinspeisepositionen (A ... E), welchen je eine Lichtquelle (3, 3'; 4, 4', 4"; 22a ... e) zugeordnet ist, wobei der Lichtleiter zur Führung des eingespeisten Lichts sowie zur Abstrahlung von Licht auf Grund von an dem Lichtleiter ausgebildeten Störstellen (6) eingerichtet ist,
**dadurch gekennzeichnet, dass**
den Lichtquellen (3, 3'; 4, 4', 4"; 22a ... e) eine Ansteuerschaltung (9) zugeordnet ist, welche dazu eingerichtet ist, die Helligkeit der Lichtquellen unabhängig voneinander nach vorgebbaren Dimmkurven zeitabhängig zu steuern.

8. Lichtleiterstruktur (1) nach Anspruch 7, **dadurch gekennzeichnet, dass** die Ansteuerschaltung (9) einen Impulsgeber (15) zur Erzeugung eines Grundimpulses vorbestimmter Dauer aufweist.

9. Lichtleiterstruktur (1) nach Anspruch 8, **dadurch gekennzeichnet, dass** der Ausgang des Impulsgebers (15) einem erstem Impulsformer (16) zur Erzeugung eines ersten Ansteuerimpulses mit ansteigender und abfallender Dimmrampe zugeführt ist,
der Ausgang des Impulsformers (15) weiters einer Verzögerungsstufe (17) zur Bildung einer Anstiegs- und/oder Abfallverzögerung des Grundimpulses zugeführt ist,
der in der Verzögerungsstufe (17) gebildete Impuls mit verzögerter Anstiegs- bzw. Abfallflanke zumindest einem zweiten Impulsformer (18) zur Erzeugung zumindest eines zweiten Ansteuerimpulses mit entsprechend verzögerter ansteigender und abfallender Dimmrampe zugeführt ist
und die Ausgänge des ersten und des zumindest zweiten Impulsformers (16, 18) je zumindest einer Ansteuer- und Treiberstufe (19, 20) für die Lichtquellen (3; 4; 22a ... e) zugeführt sind.

10. Lichtleiterstruktur (1) nach einem der Ansprüche 7 bis 9, **dadurch gekennzeichnet, dass** die Lichtleiter (2; 12; 21a ... e) gebogen sind.

11. Lichtleiterstruktur (1) nach einem der Ansprüche 7 bis10, **dadurch gekennzeichnet, dass** sie zwei Lichtleiter (2,2') aufweist, die parallel verlaufen und einstückig ausgebildet sind.

12. Lichtleiterstruktur (1) nach einem der Ansprüche 7 bis 11, **dadurch gekennzeichnet, dass** sie zwei Lichtleiter (11, 12) aufweist, die an einem Ende zusammengeführt sind und an diesem Ende eine Lichteinspeiseposition (A) für eine erste gemeinsame Lichtquelle (3) sowie an ihren anderen Enden eine zweite (4) und dritte (4") Lichtquelle an einer zweiten und dritten Lichteinspeiseposition (B und C) besitzen.

13. Lichtleiterstruktur (1) nach einem der Ansprüche 7 bis 10, **dadurch gekennzeichnet, dass** sie zumindest zwei Lichtleiter (21a ... e) aufweist, jeden Lichtleiter an einem Ende an einer Lichteinspeiseposition (A ... E) eine Lichtquelle (22a ... e) zugeordnet ist, jeder Lichtleiter einen Leuchtabschnitt (25a ... e) aufweist und die Leuchtabschnitte unter Bildung einer im Wesentlichen durchgehenden Leuchtstruktur aneinander anschließen.

14. Lichtleiterstruktur (1) nach Anspruch 13, **dadurch gekennzeichnet, dass** von den Lichteinspeisepositionen (A ... E) ausgehende Lichtleitabschnitte (23a ... e) über eine Abwinkelung (24a ... e) zu den Leuchtabschnitten (25a ... e) führen.

## Claims

1. A method for generating a chasing effect on an optical wave guide structure (1) comprising at least one optical wave guide (2, 2' ; 11, 12 ; 21a ... e) and at least two light input positions (A ... E), each of which is associated with a light source (3, 3' ; 4, 4', 4" ; 22a ... e), wherein the optical wave guide is designed to guide the input light and to emit light based on irregularities embodied on the optical wave guide,
**characterized in that**
the brightness levels of the light sources (3, 3' ; 4, 4', 4" ; 22a ... e) are changed independently from each other according to predefined dimming curves as a function of time.

2. The method according to claim 1, **characterized in that** the brightness of a first light source (3) is reduced starting from a maximum value according to a first falling dimming ramp, and the brightness of a second light source (4) is reduced starting from a maximum value according to a second falling dimming ramp, wherein the reduction in the brightness of the second light source begins with time delay in relation to the starting time (t₃) of the reduction of the first light source.

3. The method according to claim 1, **characterized in that** the brightness of a first light source (3) is increased up to a maximum value according to a first rising dimming ramp, is maintained at this value for a first fixed time duration (t₅-t₃), and is then reduced to a minimum value according to a first falling dimming ramp, and that the brightness of a second light source (4) is increased up to a maximum value according to a second rising dimming ramp, is maintained at this value for a second fixed time duration(t₆-t₄), and is then reduced to a minimum value according to a second falling dimming ramp, wherein the activation point of the second rising dimming ramp is time-delayed by a start delay time (t₂-t₁) in relation to the activation point of the first rising dimming ramp, and the activation point of the second falling dimming ramp is time-delayed by a stop delay time (t₇-t₆) in relation to the activation point of the first falling dimming ramp.

4. The method according to claim 1, **characterized in that** the activation point (t₂) of the second rising dimming ramp takes place during the first rising dimming ramp.

5. The method according to claim 1, **characterized in that** the maximum value of the second light source (4) persists until the end (t₅) of the first falling dimming ramp of the first light source.

6. A method according to any one of claims 1 to 5, **characterized in that** the light sources (3, 3' ; 4, 4', 4" ; 22a ... e) emit light having differing colors.

7. An optical wave guide structure (1) comprising at least one optical wave guide (2, 2'; 11, 12; 21a e) and at least two light input positions (A ... E), each of which is associated with a light source (3, 3'; 4, 4', 4"; 22a ... e), the optical wave guide being designed to guide the input light and to emit light based on irregularities (6) embodied on the optical wave guide,
**characterized in that**
the light sources (3, 3'; 4, 4', 4"; 22a ... e) are associated with an actuating circuit (9), which is designed to control the brightness levels independently of the light sources according to predefinable dimming curves as a function of time.

8. The optical wave guide structure (1) according to claim 7, **characterized in that** the actuating circuit (9) comprises a pulse generator (15) for generating a basic pulse having a predetermined duration.

9. The optical wave guide structure (1) according to claim 8, **characterized in that** the output of the pulse generator (15) is supplied to a first pulse shaper (16) for generating a first actuating pulse having a rising and falling dimming ramp,
the output of the pulse shaper (15) is further supplied to a time-delay module (17) for forming a delay in the rise and/or fall of the basic pulse,
the pulse having a delayed rising or falling edge formed in the time-delay module (17) is supplied to at least one second pulse shaper (18) for generating at least one second actuating pulse having an accordingly delayed rising and falling dimming ramp, and
the outputs of the first and of the at least one second pulse shaper (16, 18) are supplied in each case to at least one actuating and driver stage (19, 20) for the light sources (3; 4; 22a ... e).

10. An optical wave guide structure (1) according to any one of claims 7 to 9, **characterized in that** the optical wave guides (2; 12; 21a ... e) are bent.

11. An optical wave guide structure (1) according to any one of claims 7 to 10, **characterized by** comprising two optical wave guides (2, 2'), which extend in parallel and are designed as one piece.

12. An optical wave guide structure (1) according to any one of claims 7 to 11, **characterized by** comprising two optical wave guides (11, 12), which are brought together at one end and which have a light input position (A) for a first shared light source (3) at this end, and a second (4) and a third light source (4") on a second and a third light input position (B and C) at the other end.

13. An optical wave guide structure (1) according to any one of claims 7 to 10, **characterized by** comprising at least two optical wave guides (21a ... e), a light source (22a ... e) being associated with each optical wave guide at one end on a light input position (A ... E), each optical wave guide comprising a luminous section (25a ... e), and the luminous sections connecting to each other, forming an essentially continuous luminous structure.

14. The optical wave guide structure (1) according to claim 13, **characterized in that** light guide sections (23a ... e) originating from the light input positions (A ... E) lead to the luminous sections (25a ... e) via an angled region (24a ... e).

## Revendications

1. Procédé de génération d'un effet chenillard sur une structure de guide d'ondes optiques (1) comportant au moins un guide d'ondes optiques (2, 2' ; 11, 12 ; 21a ... e) et comportant au moins deux emplacements d'injection de lumière (A ... E), à chacune desquels est associée une source lumineuse (3, 3' ; 4, 4', 4" ; 22a ... e), le guide d'ondes optiques étant conçu pour guider la lumière injectée ainsi que pour irradier de la lumière sur la base d'irrégularités formées sur le guide d'ondes optiques,
**caractérisé par le fait que**
la luminosité des sources lumineuses (3, 3' ; 4, 4', 4'' ; 22a ... e), indépendamment les unes des autres, est modifiée de manière asservie au temps en fonction de courbes de gradation prédéfinies.

2. Procédé selon la revendication 1, **caractérisé par le fait que** la luminosité d'une première source lumineuse (3) est diminuée en partant d'une valeur maximale selon une première rampe de gradation descendante et la luminosité d'une seconde source lumineuse (4) est diminuée en partant d'une valeur maximale selon une seconde rampe de gradation descendante, la diminution de la luminosité de la seconde source lumineuse démarrant de manière retardée dans le temps par rapport au moment de départ (t₃) de la diminution de la première source lumineuse.

3. Procédé selon la revendication 1, **caractérisé par le fait que** la luminosité d'une première source lumineuse (3) est augmentée selon une première rampe de gradation ascendante jusqu'à une valeur maximale, est maintenue à cette valeur pendant une première période de temps prédéterminée (t₅-t₃), puis est diminuée selon une première rampe de gradation descendante jusqu'à une valeur minimale, et la luminosité d'une seconde source lumineuse (4) est augmentée selon une seconde rampe de gradation ascendante jusqu'à une valeur maximale, est maintenue à cette valeur pendant une seconde période de temps prédéterminée (t₆-t₄), puis est diminuée selon une seconde rampe de gradation descendante jusqu'à une valeur minimale, le point de départ de la seconde rampe de gradation ascendante étant retardé dans le temps par rapport au point de départ de la première rampe de gradation ascendante d'un temps de retard de départ (t₂-t₁) et le point de départ de la seconde rampe de gradation descendante étant retardé dans le temps par rapport au point de départ de la première rampe de gradation descendante d'un temps de retard d'arrêt (t₇-t₆).

4. Procédé selon la revendication 1, **caractérisé par le fait que** le point de départ (t₂) de la seconde rampe de gradation ascendante tombe dans la première rampe de gradation ascendante.

5. Procédé selon la revendication 1, **caractérisé par le fait que** la valeur maximale de la seconde source lumineuse (4) persiste jusqu'à la fin (t₅) de la première rampe de gradation descendante de la première source lumineuse.

6. Procédé selon l'une des revendications 1 à 5, **caractérisé par le fait que** les sources lumineuses (3, 3' ; 4, 4', 4" ; 22a ... e) irradient de la lumière ayant différentes couleurs.

7. Structure de guide d'ondes optiques (1) comportant au moins un guide d'ondes optiques (2, 2' ; 11, 12 ; 21a ... e) et comportant au moins deux emplacements d'injection de lumière (A ... E), à chacune desquels est associée une source lumineuse (3, 3' ; 4, 4', 4" ; 22a ... e), le guide d'ondes optiques étant conçu pour guider la lumière injectée ainsi que pour irradier de la lumière sur la base d'irrégularités (6) formées sur le guide d'ondes optiques,
**caractérisée par le fait que**
aux sources lumineuses (3, 3' ; 4, 4', 4" ; 22a ... e) est associé un circuit de commande (9), lequel est conçu pour commander, de manière asservie au temps, la luminosité des sources lumineuses, indépendamment les unes des autres, selon des courbes de gradation pouvant être prédéfinies.

8. Structure de guide d'ondes optiques (1) selon la revendication 7, **caractérisée par le fait que** le circuit de commande (9) présente un générateur d'impulsions (15) pour générer une impulsion de base de durée prédéterminée.

9. Structure de guide d'ondes optiques (1) selon la revendication 8, **caractérisée par le fait que** la sortie du générateur d'impulsions (15) est adressée à un premier conformateur d'impulsions (16) pour générer une première impulsion de commande ayant une rampe de gradation ascendante et descendante,
la sortie du générateur d'impulsions (15) est adressée en outre à un étage de retard (17) pour créer un retard de montée et/ou de descente de l'impulsion de base,
l'impulsion formée dans l'étage de retard (17) ayant un flanc montant ou descendant retardé est adressée au moins à un second conformateur d'impulsions (18) pour générer au moins une seconde impulsion de commande ayant une rampe de gradation ascendante et descendante retardée correspondante,
et les sorties du premier et du au moins second conformateur d'impulsions (16, 18) sont chacune adressées au moins à un étage de commande et d'attaque (19, 20) pour les sources lumineuses (3, 4 ; 22a ... e).

10. Structure de guide d'ondes optiques (1) selon l'une des revendications 7 à 9, **caractérisée par le fait que** les guides de lumière (2 ; 12 ; 21a ... e) sont recourbées.

11. Structure de guide d'ondes optiques (1) selon l'une des revendications 7 à 10, **caractérisée par le fait qu'**elle présente deux guides d'ondes optiques (2, 2'), lesquels s'étendent de manière parallèle et sont formés d'une seule pièce.

12. Structure de guide d'ondes optiques (1) selon l'une des revendications 7 à 11, **caractérisée par le fait qu'**elle présente deux guides d'ondes optiques (11, 12), lesquels sont réunis à une extrémité et possèdent, sur cette extrémité, un emplacement d'injection de lumière (A) pour une première source lumineuse commune (3) ainsi que, sur les autres extrémités, une deuxième (4) et une troisième (4") source lumineuse sur un deuxième et un troisième emplacement d'injection de lumière (B et C).

13. Structure de guide d'ondes optiques (1) selon l'une des revendications 7 à 10, **caractérisée par le fait qu'**elle présente au moins deux guides d'ondes optiques (21a ... e), à chacun desquels est associée une source lumineuse (22a ... e) sur une extrémité à un emplacement d'injection de lumière (A ... E), chaque guide d'ondes optiques présente une section lumineuse (25a ... e) et les sections lumineuses se raccordent les unes aux autres pour former une structure lumineuse sensiblement continue.

14. Structure de guide d'ondes optiques (1) selon la revendication 13, **caractérisée par le fait que** des sections de guide d'ondes optiques (23a ... e) partant des emplacements d'injection de lumière (A ... E) conduisent aux sections lumineuses (25a ... e) par l'intermédiaire d'un coude (24a ... e).
